# EUROPEAN PATENT SPECIFICATION

(11) **EP 3 217 852 B1**
(45) Date of publication and mention of the grant of the patent: **08.01.2020**
(21) Application number: 15858552.1
(22) Date of filing: 11.11.2015
(51) Int. Cl.: A47J 43/04, A47J 43/046, A47J 43/07

(54) **APPLIANCE WITH INTEGRATED AGITATOR ASSEMBLY**
GERÄT MIT INTEGRIERTER RÜHRFLÜGELANORDNUNG
APPAREIL À ENSEMBLE AGITATEUR INTÉGRÉ

(30) Priority: 11.11.2014 US 201462077982 P
(43) Date of publication of application: 20.09.2017
(73) Proprietor: Sunbeam Products, Inc., Boca Raton, FL 33431 (US)
(72) Inventor: BEHAR, Moises, Boca Raton, FL 33433 (US); SPENCER, Jr. Joseph C., Purvis, MS 39475 (US)
(74) Representative: Cabinet Beau de Loménie
(86) International application number: PCT/US2015/060095
(87) International publication number: WO 2016/077424

(56) References cited:
- WO-A1-93/22042
- WO-A1-2004/058022
- WO-A2-2014/122260
- DE-B- 1 037 088
- JP-A- 2006 271 439
- JP-A- 2013 146 330
- US-A- 3 784 118
- US-A1- 2012 018 561
- US-A1- 2013 183 426

## Description

### FIELD OF THE INVENTION

The invention relates to food preparation and more particularly to a food preparation appliance with an agitator assembly that may be assembled into an integrated one-piece unit for easy installation on a food preparation container of a food preparation appliance.

### BACKGROUND OF THE INVENTION

Food preparation appliances such as blending appliances are known in the art. Typically, such appliances include a housing containing a motor-fan assembly, a blending container and an agitator assembly rotated by the motor-fan assembly. The agitator assembly is usually comprised of three pieces: an agitator nut, an agitator base with one or more agitator blades, and a seal. These components must each be assembled separately on the blending container before the entire assembly is secured to the blending container with the agitator nut which may be cumbersome for the consumer. The document DE 10 37 088 discloses a blender and an agitator assembly comprising an agitator nut, an agitator base with blades and a seal.

### SUMMARY OF THE INVENTION

In an embodiment, there is provided an appliance including a food preparation container, an agitator assembly for attachment to a blending container, the agitator assembly including: an agitator nut configured to secure the agitator assembly to the blending container, an agitator base including at least one agitator blade mounted thereon and configured to be seated in the agitator nut prior to the agitator assembly being secured to the blending container, a groove formed in an inner wall of the agitator nut, and a seal having an outer periphery that when inserted into the groove secures the agitator base into the agitator nut.

In an embodiment, there is provided an agitator assembly for a blending container, including an agitator nut configured to secure the agitator assembly to the blending container, an agitator base including at least one agitator blade mounted thereon and configured to be seated in the agitator nut prior to the agitator assembly being secured to the blending container, a groove formed in an inner wall of the agitator nut, and a seal having an outer periphery that when inserted into the groove secures the agitator base into the agitator nut.

In an embodiment, there is provided a method of constructing an agitator assembly for a blending container, including providing an agitator base including at least one agitator blade mounted thereon, seating the agitator base in the agitator nut prior to the agitator assembly being secured to the blending container, and securing the agitator base into the agitator nut by inserting a seal having an outer periphery that when inserted into a groove formed in a sidewall of the agitator nut.

### BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:
FIG. 1 is a front perspective view of an embodiment of a blending jar with an integrated agitator assembly for use with a blending appliance;
FIG. 2 is an exploded perspective view thereof;
FIG. 3 is a front perspective view of the integrated agitator assembly of FIG. 1; and
FIG. 4 is a sectional view thereof.

### DETAILED DESCRIPTION OF THE INVENTION

An integrated agitator assembly for a blending container of a blending appliance The agitator assembly includes an agitator nut, agitator base with dual agitator blades, and a seal that fits into a groove in the agitator nut to secure the agitator base into the agitator nut forming an integrated one-piece agitator assembly than can easily be installed on the blending container. The seal can also be removed from the groove in the agitator nut to release the agitator base from the agitator nut so that all of the components of the agitator assembly may be cleaned or replaced as needed.

In the following description, various aspects of the present invention will be described. For purposes of explanation, specific configurations and details are set forth in order to provide a thorough understanding of the present invention. However, it will also be apparent to one skilled in the art that the present invention may be practiced without the specific details. Furthermore, well-known features may be omitted or simplified in order not to obscure the present invention.

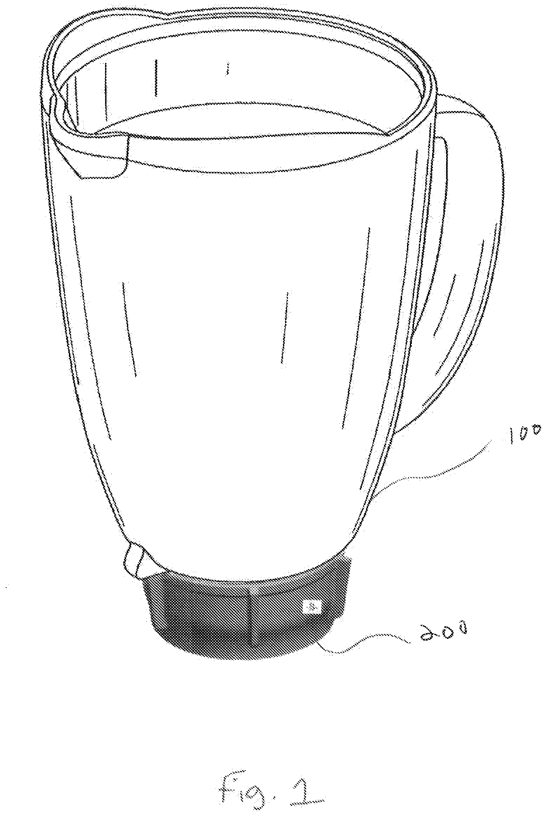

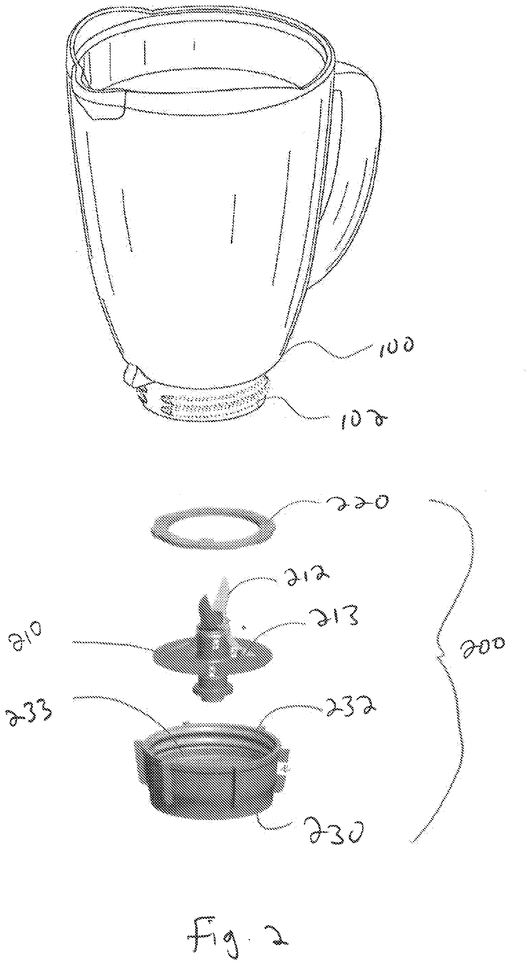

Referring now to FIGS. 1 and 2, there is illustrated a blending container 100 for holding ingredients for blending a blended beverage such as juices, mixed drinks, slushies, soups, etc. The blending container 100 may be sized as shown in the illustration for preparing multiple servings of a blended beverage or may be sized for preparing a single serving of a blended beverage. The blending container 100 may be formed from any suitable material such as glass, plastic, metal, etc., and may be fitted with a lid (not shown) for preventing spillage of the contents. An agitator assembly 200 is disposed at the bottom of the blending container 100 for agitating contents placed into the blending container 100. The agitator assembly 200 is configured to be mounted on a motorized base (not shown) which provides rotary power to the agitator assembly 200. The agitator assembly 200 includes an agitator nut 230, a seal 220 and an agitator base 210, The seal 220 is annular shaped with a hole in the center and an outer periphery which are separated by a strip of material of a finite width. The seal 220 is made from a resilient material such as rubber or plastic so that it may be installed in the agitator nut 230.

One or more agitator blades 212, 213 may be mounted on the agitator base 210. For example, agitator blade 212 may be mounted on top of agitator blade 213. The agitator blade 212 may be comprised of a pair of upwardly disposed diametrically opposed blade sections and the agitator blade 213 may be comprised of downwardly disposed diametrically opposed blade sections. The exact number of agitator blades and their configurations is not meant to be limiting in any sense since any number and/or configuration of agitator blades is possible. The agitator assembly 200 with agitator base 210 and agitator blades 212, 213 is mounted on the bottom of the blending container 100 via threads 232 on the agitator nut 230 which engage complementary threads 102 on the bottom of the blending container 100.

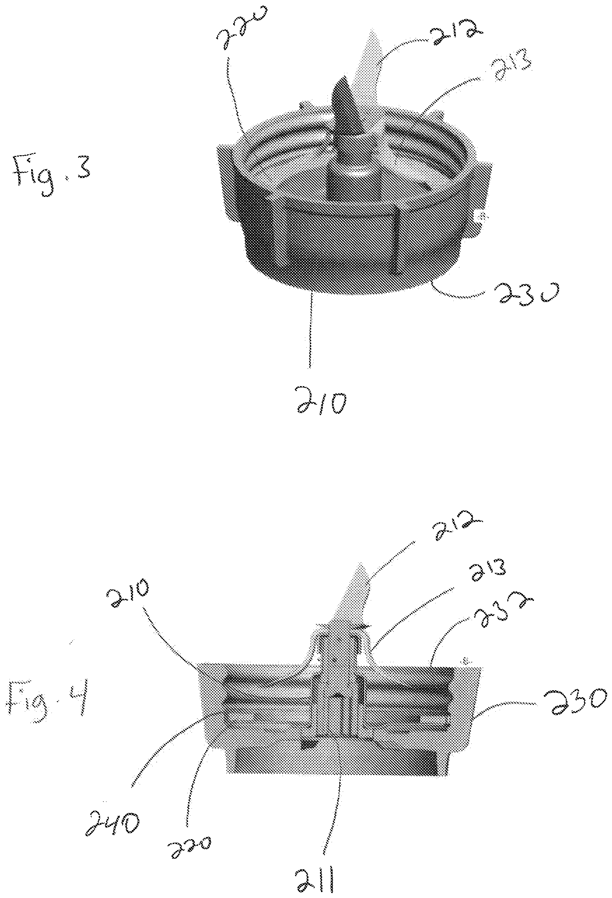

Referring now also to FIGS. 3 and 4, the agitator base 210 and agitator blades 212, 213 may be secured inside the agitator nut 230 by 1) inserting the agitator base 210 into the interior of the agitator nut 230; 2) installing the seal 220 over the agitator base 210 by inserting the agitator blades 212, 213 through the hole in the center of the seal 220; and 4) inserting the outer periphery of the seal 220 into a groove 240 formed in the inner wall of the agitator nut 230 beneath the threads 232. The resulting integrated one-piece agitator assembly 200 may be installed on the blending container 100 more easily than installing all the components separately. The blending container 100 and agitator assembly 200 may be installed on a motorized base (not shown) by coupling a keyed or splined socket 211 on the agitator assembly 200 with a complementary keyed or splined shaft (not shown) on the motorized base (not shown). The integrated one-piece agitator assembly 200 may be also quickly and easily be dis-assembled into separate components for cleaning or repair by removing the seal 220 from the groove 240 which releases the agitator base 210 from the agitator nut 230.

It will be appreciated by persons skilled in the art that the present invention is not limited to what has been particularly shown and described herein above. In addition, unless mention was made above to the contrary, it should be noted that all of the accompanying drawings are not to scale. A variety of modifications and variations are possible in light of the above teachings without departing from the scope of the invention, which is limited only by the following claims.

## Claims

1. An agitator assembly (200) for a blending container (100), comprising:
an agitator nut (230) configured to secure the agitator assembly (200) to the blending container (100);
an agitator base (210) including at least one agitator blade (212, 213) mounted thereon and configured to be seated in the agitator nut (230) prior to the agitator assembly (200) being secured to the blending container (100);
**characterized by** a groove (240) formed in an inner wall of the agitator nut (230); and
a seal (220) having an outer periphery that when inserted into the groove (240) secures the agitator base (210) into the agitator nut (230).

2. The agitator assembly (200) of claim 1, further including:
Threads (232) on an inner wall of the agitator nut (230) disposed above the groove (240) configured to mate with complementary threads (102) formed on an end of the blending container (100).

3. An appliance, comprising:
a food preparation container; and
an agitator assembly (200) according to claims 1 or 2.

4. A method of constructing an agitator assembly (200) for a blending container (100), comprising:
providing an agitator base (210) including at least one agitator blade (212, 213) mounted thereon;
seating the agitator base (210) in an agitator nut (230) prior to the agitator assembly (200) being secured to the blending container (100); and
**characterized by** securing the agitator base (210) into the agitator nut (230) by inserting a seal (220) having an outer periphery into a groove (240) formed in an inner wall of the agitator nut (230).

## Patentansprüche

1. Rührwerkanordnung (200) für einen Mischbehälter (100), umfassend:
eine Rührwerkgewindebuchse (230), die dazu ausgebildet ist, die Rührwerkanordnung (200) an dem Mischbehälter (100) zu befestigen,
eine Rührwerkbasis (210) einschließlich mindestens eines darauf montierten Rührflügels (212, 213), die dazu ausgebildet ist, in die Rührwerkgewindebuchse (230) eingesetzt zu werden, bevor die Rührwerkanordnung (200) an dem Mischbehälter (100) befestigt wird,
**gekennzeichnet durch** eine Nut (240), die in einer Innenwand der Rührwerkgewindebuchse (230) gebildet ist, und
eine Dichtung (220), die einen äußeren Umfang aufweist, die, wenn sie in die Nut (240) eingesetzt ist, die Rührwerkbasis (210) in die Rührwerkgewindebuchse (230) hinein sichert.

2. Rührwerkanordnung (200) nach Anspruch 1, ferner umfassend:
Gewindegänge (232) auf einer Innenwand der Rührwerkgewindebuchse (230), die oberhalb der Nut (240) angeordnet und dazu ausgebildet sind, zu komplementären Gewindegängen (102) zu passen, die an einem Ende des Mischbehälters (100) gebildet sind.

3. Gerät, umfassend:
einen Lebensmittelzubereitungsbehälter und
eine Rührwerkanordnung (200) nach Anspruch 1 oder 2.

4. Verfahren zum Konstruieren einer Rührwerkanordnung (200) für einen Mischbehälter (100), umfassend:
Bereitstellen einer Rührwerkbasis (210) einschließlich mindestens eines darauf montierten Rührflügels (212, 213),
Einsetzen der Rührwerkbasis (210) in eine Rührwerkgewindebuchse (230), bevor die Rührwerkanordnung (200) an dem Mischbehälter (100) befestigt wird, und
**gekennzeichnet durch** Sichern der Rührwerkbasis (210) in die Rührwerkgewindebuchse (230) durch Einsetzen einer Dichtung (220), die einen äußeren Umfang aufweist, in eine Nut (240), die in einer Innenwand der Rührwerkgewindebuchse (230) gebildet ist.

## Revendications

1. Ensemble agitateur (200) pour un récipient de mélange (100) comprenant :
un écrou d'agitateur (230) configuré pour fixer l'ensemble agitateur (200) au récipient de mélange (100);
une base d'agitateur (210) comprenant au moins une pale d'agitateur (212, 213) montée sur cette dernière et configurée pour être installée sur l'écrou d'agitateur (230) avant que l'ensemble agitateur (200) ne soit fixé sur le récipient de mélange (100) ;
**caractérisé par** une rainure (240) formée dans une paroi interne de l'écrou d'agitateur (230) ; et
un joint d'étanchéité (220) ayant une périphérie externe qui, lorsqu'il est inséré dans la rainure (240), fixe la base d'agitateur (210) dans l'écrou d'agitateur (230).

2. Ensemble agitateur (200) selon la revendication 1, comprenant en outre :
des filetages (232) sur une paroi interne de l'écrou d'agitateur (230) disposés au-dessus de la rainure (240), configurés pour se coupler avec des filetages (102) complémentaires formés sur une extrémité du récipient de mélange (100).

3. Appareil comprenant :
un récipient de préparation alimentaire ; et
un ensemble agitateur (200) selon les revendications 1 ou 2.

4. Procédé pour fabriquer un ensemble agitateur (200) pour un récipient de mélange (100), comprenant les étapes suivantes :
prévoir une base d'agitateur (210) comprenant au moins une pale d'agitateur (212, 213) montée sur cette dernière ;
installer la base d'agitateur (210) dans un écrou d'agitateur (230) avant que l'ensemble agitateur (200) ne soit fixé sur le récipient de mélange (100) ; et
**caractérisé par** le fait de fixer la base d'agitateur (210) dans l'écrou d'agitateur (230) en insérant un joint d'étanchéité (220) ayant une périphérie externe dans une rainure (240) formée dans une paroi interne de l'écrou d'agitateur (230).
